Europäisches Patentamt

European Patent Office

Office européen des brevets

(11) Numéro de publication: **0 236 203**
**B1**

# FASCICULE DE BREVET EUROPEEN

(45) Date de publication du fascicule du brevet:
**20.12.89**

(51) Int. Cl.⁴: **E21B 47/04, G01F 23/28**

(21) Numéro de dépôt: **87400335.3**

(22) Date de dépôt: **16.02.87**

(54) Procédé de mise en place d'une sonde de contrôle de la position d'une interface entre deux fluides et dispositif pour la mise en oeuvre du procédé.

(30) Priorité: **20.02.86 FR 8602315**

(43) Date de publication de la demande:
**09.09.87 Bulletin 87/37**

(45) Mention de la délivrance du brevet:
**20.12.89 Bulletin 89/51**

(84) Etats contractants désignés:
**AT BE CH DE ES GB GR IT LI LU NL SE**

(56) Documents cités:
**DE-A- 2 026 480**
**DE-B- 1 190 210**
**US-A- 3 668 392**

(73) Titulaire: **GAZ DE FRANCE, 23, rue Philibert Delorme,
F-75017 Paris(FR)**

(72) Inventeur: **Lloret, Jean-Claude, 21, rue Lacanal,
F-75015 Paris(FR)**
Inventeur: **Bonnaure Christian, 17, avenue Amiral
Courbert, F-59130 Lambersart(FR)**

(74) Mandataire: **Lerner, François, 5, rue Jules Lefèbvre,
F-75009 Paris(FR)**

## Description

L'invention concerne un procédé et un dispositif pour contrôler la position ou l'évolution d'une interface entre deux fluides de densités différentes.

De façon plus spécifique, l'invention se rapporte, en particulier, à un procédé de mise en place de la sonde de façon à contrôler l'interface lors du creusement par lessivage d'une cavité saline, ladite cavité étant remplie, au moins en partie, par l'un au moins des fluides précédemment mentionnés.

Dans une telle application, il est en effet essentiel de connaître la position ou la variation de position de l'interface entre ses deux fluides, de façon à pouvoir déterminer la profondeur de creusement atteinte, lequel creusement s'effectue de façon générale du fond vers la surface, et ainsi contrôler l'évolution de la cavité.

On notera que les fluides en présence, dans la cavité sont souvent du fuel (en partie supérieure), et de la saumure (en partie inférieure), la saumure se constituant à partir d'eau injectée sous pression adaptée.

On connaît des procédés de contrôle de ce type dans lesquels les fluides considérés peuvent circuler dans l'un et/ou l'autre de deux tubes d'amenée vers la cavité et/ou d'évacuation (voir, par exemple, DE-A 2 026 480). Généralement ces deux tubes sont disposés dans la cavité de sorte que l'un s'étende à l'intérieur de l'autre.

En outre, la sonde est, sur les appareils connus, la plupart du temps reliée à un poste fixe extérieur par un câble de liaison au bout duquel elle est suspendue. Cette sonde comprend généralement, au moins une source émettrice de signaux ainsi qu'un détecteur-récepteur.

Sur de tels appareils, les relevés de positions de l'interface sont effectués par diagraphie, ce qui implique :

- l'utilisation d'une unité complète de mesure par diagraphie (laboratoire mobile et son personnel spécialisé) sur le site, à chaque mouvement de position des fluides, afin d'assurer le positionnement précis de la sonde à l'endroit où doivent être effectuées les mesures,
- la présence en permanence de la sonde et du câble à l'intérieur du tube central.

En pratique, une telle disposition de la sonde interne au tube central peut s'avérer rédhibitoire. Tel est notamment le cas lorsque l'on doit contrôler une cavité saline creusée par une technique dite de lessivage inverse, en soi connue.

En effet, dans une telle application, la saumure saturée à évacuer circule dans le tube intérieur. La présence des appareils de mesure à l'intérieur de ce tube nuit à son écoulement correct. Les pertes de charge sont trop élevées. En outre on note une usure prématurée de la sonde et du câble, provoquée par le sel contenu dans la saumure.

L'invention résoud ces problèmes en prévoyant de mettre en place la sonde de mesure et son câble dans l'espace intermédiaire qui sépare le tube intérieur du tube extérieur.

De cette façon on résoud de façon radicale les problèmes de perte de charge et de corrosion.

A ce sujet on notera que dans l'espace annulaire de séparation des deux tubes circule en général de l'eau destinée au creusement de la cavité.

En pratique, l'invention prévoit que la mise en place de la sonde dans ledit espace intermédiaire s'effectuera de telle sorte que :

- on vienne la fixer sensiblement contre une partie de la paroi extérieure du tube intérieur, après quoi
- on positionnera la partie du tube intérieur qui porte cette sonde à proximité de l'endroit où l'on désire effectuer la mesure.

Ainsi la sonde et son câble font partie de l'équipement fixe. Ils peuvent être positionnés à l'endroit désiré pour une durée indéterminée. En outre, la présence d'une équipe spécialisée pour la manoeuvre de la sonde n'est plus nécessaire.

L'invention concerne également un dispositif pour la mise en oeuvre du procédé que l'on vient de présenter.

Dans l'application particulière du dispositif au creusement de cavités, notamment salines, le contrôle de l'évolution de ces dernières suppose, bien évidemment, que chaque puits soit équipé du dispositif de contrôle de l'invention.

L'invention sera mieux comprise, et d'autres buts, détails et avantages de celle-ci apparaîtront plus clairement à la lumière de la description explicative qui va suivre, donnée uniquement à titre d'exemple et faite en référence aux dessins non limitatifs annexés dans lesquels :

- la figure 1 est une vue partielle schématique, en coupe, d'une cavité souterraine en cours de creusement, ainsi que de la situation du dispositif de contrôle de l'invention,
- la figure 2 est une vue schématique axiale avec arrachement des éléments constitutifs du dispositif de contrôle de l'invention,
- la figure 3 illustre, en coupe, selon la ligne III-III de la figure 2, le positionnement du détecteur,
- la figure 4 illustre, en coupe, selon la ligne IV-IV de la figure 2, le positionnement de la source,
- les figures 5A, 5B et 5C illustrent les différentes positions relatives que peuvent occuper la sonde de contrôle et l'interface.

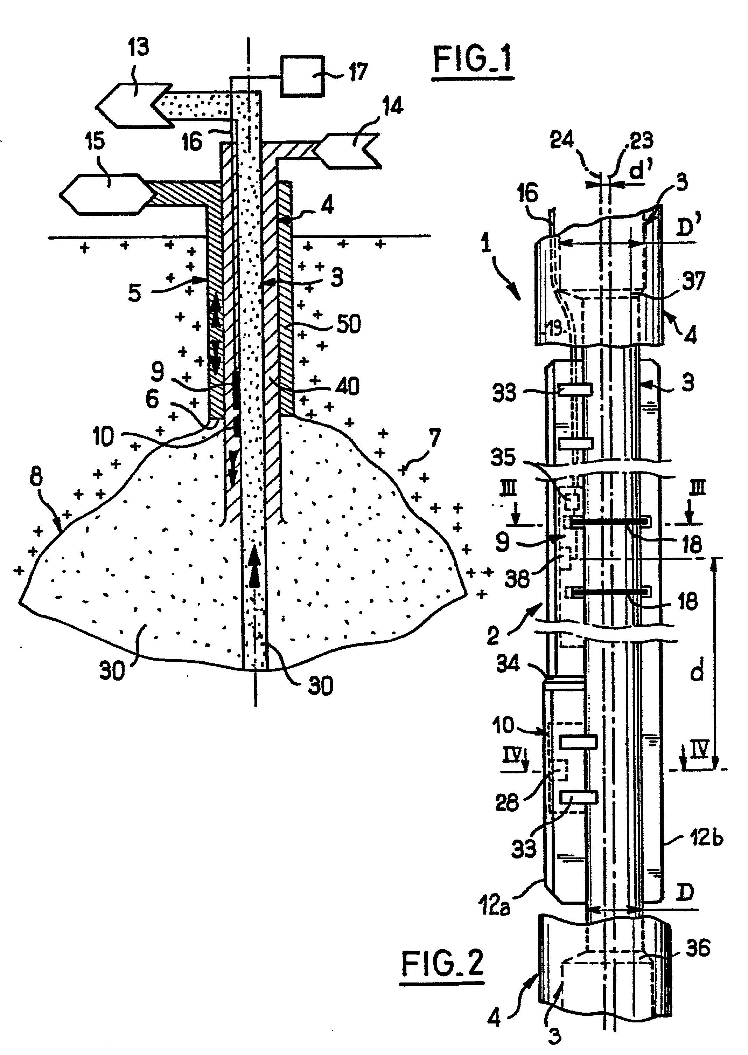

La figure 1 montre une cavité saline 8 à la surveillance de laquelle le dispositif de contrôle de la présente invention est particulièrement adapté et nécessaire, afin de connaître la situation ou l'évolution d'une interface 6 entre deux fluides 30, 50 non miscibles et de densités différentes, contenus dans ladite cavité.

On notera, dès à présent, que la connaissance de la position de l'interface 6 permet le contrôle du creusement de la cavité 8.

On ne décrira pas le procédé de lessivage au moyen duquel la cavité 8 peut être réalisée, celui-ci n'étant pas un des objets de l'invention et étant, par ailleurs, en soi connu.

On notera uniquement qu'à la figure 1 on a représenté schématiquement deux tubes, l'un intérieur 3, l'autre extérieur 4, qui pénètrent dans la cavité 8 par un puits d'amenée ou cheminée 5. Selon le procédé de creusement retenu, dans le tube 3 circule librement, sans rencontrer d'obstacle, de la saumure 30 évacuée en surface vers l'extérieur, en 13. La saumure a été soutirée de la cavité à un niveau déterminé de celle-ci. Dans le tube extérieur 4 circule, vers la cavité 8, de l'eau 40, par alimentation en 14. Cette eau est destinée au creusement de la cavité et constitue, par mélange avec les éléments salins de la formation souterraine 7, la saumure 30.

Comme il apparaît clairement, toujours de la figure 1, la paroi extérieure du tube 4 baigne, dans sa partie supérieure, c'est-à-dire sensiblement au niveau de la cheminée 5, dans un liquide 50 de densité inférieure à celle de la saumure 30, et non miscible avec celle-ci. Le fluide 50 peut être notamment du fuel dont on alimente la cheminée 5 ou que l'on soutire de celle-ci, en 15.

On notera qu'afin de faciliter la compréhension de la circulation des différents fluides, on a indiqué figure 1 leur sens par des flèches.

Sur une partie de la paroi extérieure du tube 3 et à proximité de l'interface 6, sont disposés une source 10 et un détecteur 9. Le détecteur est relié par un câble de liaison 16 à une unité d'analyse et de réception 17 placée en surface.

La source 10 et le détecteur 9 constituent les éléments de base du dispositif 1 de l'invention. Ce dispositif, qui convient particulièrement bien pour le contrôle de l'évolution ou de la position de l'interface 6 entre les deux fluides 30, 50, est représenté en détail sur la figure 2. Il se compose principalement d'une sonde de mesure, repérée 2, constituée essentiellement par la source émettrice 10 et le détecteur-récepteur 9. Le détecteur 9 et la source 10 sont écartés l'un de l'autre d'une distance $d$ déterminée. Avantageusement, la source 10 et le détecteur-récepteur 9 sont décalés verticalement, et sont alignés dans une direction sensiblement parallèle à l'axe des tubes 3, 4 ; ceux-ci étant d'axes 23, 24 sensiblement parallèles.

Entre les tubes 3 et 4 est ménagé un espace annulaire 19 suffisant pour recevoir le détecteur 9, la source 10 et leurs moyens de positionnement. Ces moyens de positionnement sont, dans l'application retenue des moyens qui maintiennent la sonde en position fixe par rapport au moins au tube intérieur 3. La sonde est alors maintenue contre la paroi extérieure 3a de ce tube intérieur.

En outre l'ensemble de la sonde 2, c'est-à-dire la source et le détecteur muni de son câble de liaison 16, est maintenu écarté de la paroi intérieure 4a du tube extérieur 4 par des entretoises, repérées 12a et 12b, formant rails de protection qui s'étendent radialement sensiblement, tel qu'illustré aux figures 2 à 4, sur toute la hauteur du dispositif de contrôle 1. Plus précisément, les entretoises 12a forment un premier jeu constitué par deux rails métalliques 121, 122, sensiblement rectilignes soudés sur une partie de la paroi extérieure 3a du tube intérieur 3, et qui s'étendent dans l'espace intermédiaire annulaire 19 jusqu'à proximité de la paroi intérieure 4a du tube 4.

Sensiblement diamétralement opposé au premier jeu, est disposé un deuxième jeu d'entretoise 12b constitué par un rail 123 soudé à la paroi 3a et qui s'étend, de même, jusqu'à proximité de la paroi intérieure 4a du tube 4.

On notera qu'on laisse un léger jeu entre l'extrémité des différentes entretoises et la surface intérieure 4a du tube extérieur, de façon à permettre une éventuelle dilatation desdites entretoises en cas de contraintes.

Les entretoises 12a, de largeur $l$ sensiblement égales, sont cependant plus larges que l'entretoise opposée 12b de largeur $l'$. De cette façon, on obtient un décentrage du tube intérieur 3 par rapport au tube extérieur 4. Les axes 23 et 24, respectivement du tube 3 et du tube 4, se trouvent alors écartés d'une distance $d'$. En d'autres termes, on augmente l'espace intérieur 19 du côté où on loge des appareils 9, 10 formant la sonde 2, et on le diminue corrélativement à l'opposé.

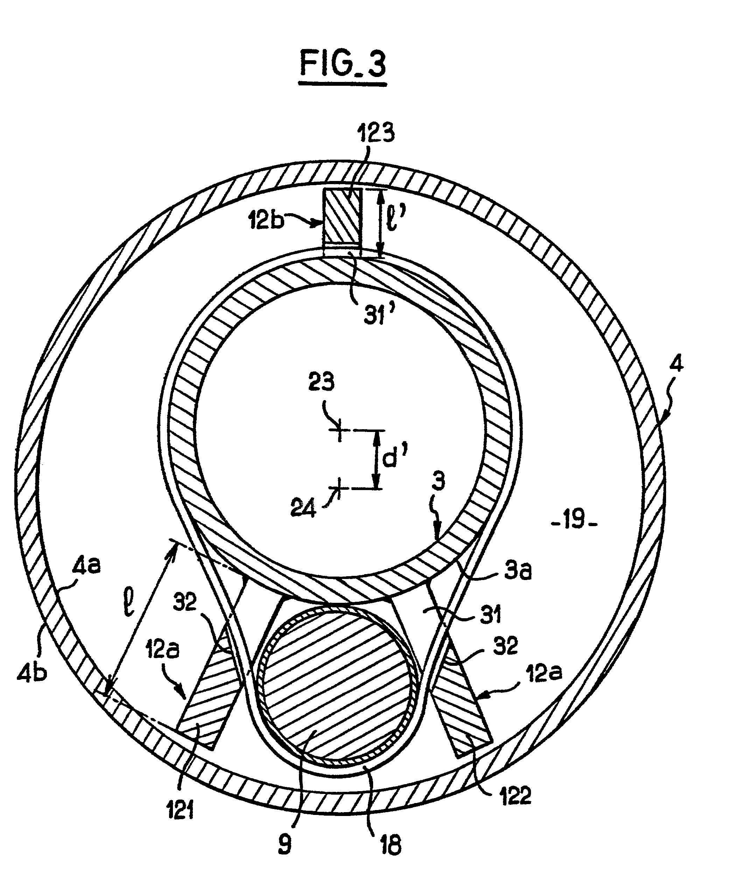

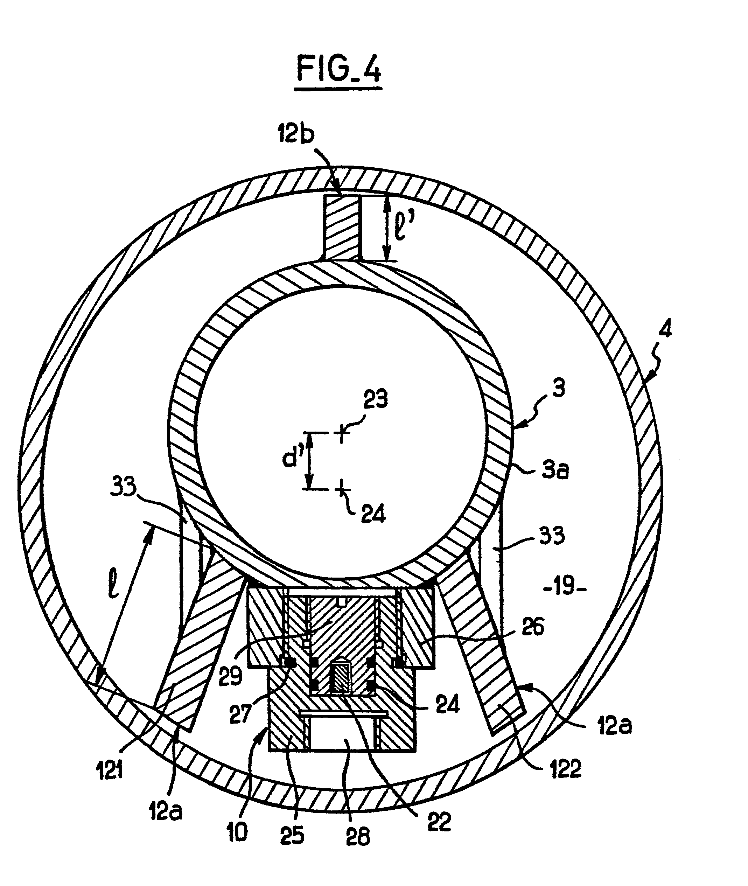

Comme il apparaît clairement des figures 3 et 4, on dispose le détecteur 9 muni de son câble de liaison 16 et la source 10 entre les deux rails 121, 122.

Si l'on se réfère maintenant plus particulièrement aux figures 2 et 3, on voit que le détecteur, schématisé en 9, est maintenu en position sensiblement contre la paroi extérieure 3a du tube intérieur 3 par des sangles métalliques ou colliers 18. Les colliers entourent le tube 3 et le détecteur 9 en passant à travers des ouvertures 31, 31' ménagées dans les différents rails 121, 122 et 123.

Avantageusement, le bord 32 de chaque ouverture 31 est biseauté de façon à faciliter le passage du collier.

On notera que sur la figure 2, on n'a représenté que deux colliers passant dans les ouvertures correspondantes à deux niveaux différents le long du détecteur 9. Cependant, ce nombre est adapté au maintien recherché.

En outre, de façon à éviter que le câble de liaison 16 se coince entre les deux tubes 3 et 4, il peut être utile de prévoir d'autres sangles de maintien (non représentées), et ce en quelques endroits le long de son trajet entre le détecteur 9 et le poste de traitement 17 disposé en surface.

Par ailleurs, comme il apparaît des figures 2 et 4, on améliore la rigidité et le maintien des rails, notamment 121 et 122, par des pattes de renfort 33 soudées sur les rails et sur la paroi extérieure 3a du tube 3. Ces renforts sont répartis en quelques endroits le long des rails. On peut notamment en prévoir à leurs extrémités supérieure et inférieure et au niveau de la sonde et/ou du détecteur.

Dans l'application retenue, la source 10 est une source radio-active. Elle est essentiellement constituée, comme connu en soi, par une pastille radio-active 22 à rayonnement dirigé, placée dans un support 29, lequel support est par exemple vissé sur un porte-source 25, des joints appropriés 24 assurant son étanchéité. Le porte source muni d'une fente ou fenêtre de rayonnement 28 est lui-même vissé sur un profilé de maintien 26, solidaire rigidement, par exemple par soudage, de la surface extérieure 3a du tube 3. Des joints adaptés 24 et 27 assurent l'étanchéité de l'ensemble ainsi constitué (figure 4).

L'ouverture 28 permet d'une part la mise en place de la pastille 22 et de son support 29, et d'autre part, de focaliser le rayonnement radioactif de la source en direction des fluides 30 et/ou 50 dans lesquels baigne la paroi extérieure 4b du tube 4. On reviendra sur cette caractéristique lors de l'explication du fonctionnement de la sonde de l'invention. De façon à éviter, tout de même, tout rayonnement direct intempestif de la source 10 vers le détecteur 9 - c'est-à-dire sans réflexion par l'un au moins des deux fluides 30, 50 - on prévoit un écran repéré 34 entre ces deux éléments. L'écran 34 peut être constitué notamment par une masse métallique suffisamment épaisse formée par exemple à partir d'une succession de cordons de soudure, ladite masse s'étendant transversalement entre les deux rails 121, 122, sensiblement sur toute leur largeur l.

Dans l'exemple présenté aux figures 2 à 4, on notera que la source 10 est, en section, de dimensions légèrement plus importantes que le détecteur 9. On comprend que dans ce cas, l'écartement radial des deux rails 121, 122, entre lesquels sont disposés ces deux éléments, est adapté à leurs dimensions. On peut en particulier prévoir que les deux rails s'écartent légèrement à partir de l'écran 34, c'est-à-dire entre l'écran et l'extrémité inférieure des rails.

On ne décrira pas la structure du détecteur 9, celle-ci ne constituant pas l'un des objets de l'invention. On notera simplement que le détecteur comprend, symbolisé en 38 à la figure 2, un capteur ou récepteur des signaux transmis par la source radioactive et un circuit de traitement, symbolisé en 35, qui envoie les informations reçues vers l'unité de surface 17, et ce par l'intermédiaire du câble de liaison 16.

Le dispositif de contrôle 1, que l'on vient de décrire, peut présenter, dans une application particulière et à titre d'exemple non limitatif, les caractéristiques dimensionnelles suivantes :

Il faut, tout d'abord, préciser que, comme connu en soi, les tubes 3 et 4 sont en fait constitués chacun par une succession de tubes mis bout à bout et joints par tout moyen approprié.

Il faut également noter qu'afin de faciliter le logement et la mise en place des appareils constituant le dispositif de l'invention, le tube intérieur 3 particulier sur lequel sont maintenus ces appareils (en particulier la source et le détecteur) est de diamètre D légèrement inférieur à celui D′ des tubes intérieurs 3 adjacents auxquels il est joint vers ses deux extrémités 36 et 37.

On peut prévoir un diamètre D égal à environ 100 mm, et un diamètre D′ sensiblement égal à 120 mm.

Les tubes extérieurs sont par contre dans l'application prévue tous de même diamètre, lequel peut être égal sensiblement à 200 mm. L'épaisseur des différents tubes 3 et 4 est d'environ 10 mm.

On peut noter, en outre, que l'excentration d′ entre les tubes 3 et 4 est avantageusement de l'ordre de 20 mm ; la largeur l des rails ou entretoises du premier jeu 12a étant alors d'environ 50 mm hors tout, tandis que la largeur du rail complémentaire opposé 12b est alors d'environ 20 mm hors tout. La hauteur, ou la longueur sur laquelle s'étendent les rails est sensiblement comprise entre 200 et 250 cm, et de préférence sensiblement égale à 230 cm.

On va maintenant présenter le fonctionnement (et succinctement la mise en place) du dispositif de contrôle de l'invention que l'on vient de décrire.

On va tout d'abord expliquer la mise en place du dispositif dans le cadre de l'application particulière retenue consistant en un contrôle d'une interface 6 entre deux liquides 30 et 50 au cours d'un creusement par lessivage, notamment inverse, d'une cavité saline.

- En premier lieu, et en début d'opération de lessivage, on met en place par la cheminée 5, le tube extérieur 4 en mettant bout à bout des tubes de même diamètre que l'on descend vers la cavité 8.

- Ensuite, après avoir préparé le tube intérieur 3 particulier porteur du dispositif de contrôle, c'est-à-dire avoir disposé le détecteur 9 et la source 10 entre les rails 121, 122 et après les avoir fixés respectivement au moyen des sangles 18 et par soudage, on descend une succession de tubes intérieurs 3 dans le tube 4.

Plus précisément, on met bout à bout une suite de tubes 3 de diamètre D′ et on intercale à un endroit particulier et déterminé de cette chaîne, le tube intérieur 3 particulier de diamètre D. On comprend que l'on intercale le tube intérieur 3 particulier de façon que, en position en sous-sol, la sonde de mesure 2 soit positionnée au niveau de l'un et/ou l'autre des deux fluides 30, 50 et à proximité de l'endroit où l'on veut effectuer le contrôle de la position de l'interface 6.

Bien entendu, on a descendu parallèlement le câble de liaison 16.

Comme on le comprend, la sonde de mesure est avantageusement disposée à une profondeur déterminée et fixe pendant toute l'opération de creusement. On veillera, en outre et de préférence, à ce qu'aucune liaison entre deux tubes extérieurs (4) (adjacents) ne soit disposée entre la source et le détecteur, cette liaison pouvant en effet perturber la propagation des rayonnements ou signaux émis par la source.

La sonde de contrôle 2 étant mise en place, on la relie au poste 17 constituant l'unité de réception et d'analyse.

Le dispositif de contrôle est opérationnel.

On relève alors les signaux reçus par le détecteur 9 après émission de ceux-ci par la source et réflexion d'une partie au moins d'entre eux par l'un au moins desdits fluides 30, 50, et on en déduit la position ou l'évolution de l'interface 6 d'après le relevé des signaux reçus qui varient en fonction de la position relative de l'interface 6 et de la sonde de mesure 2.

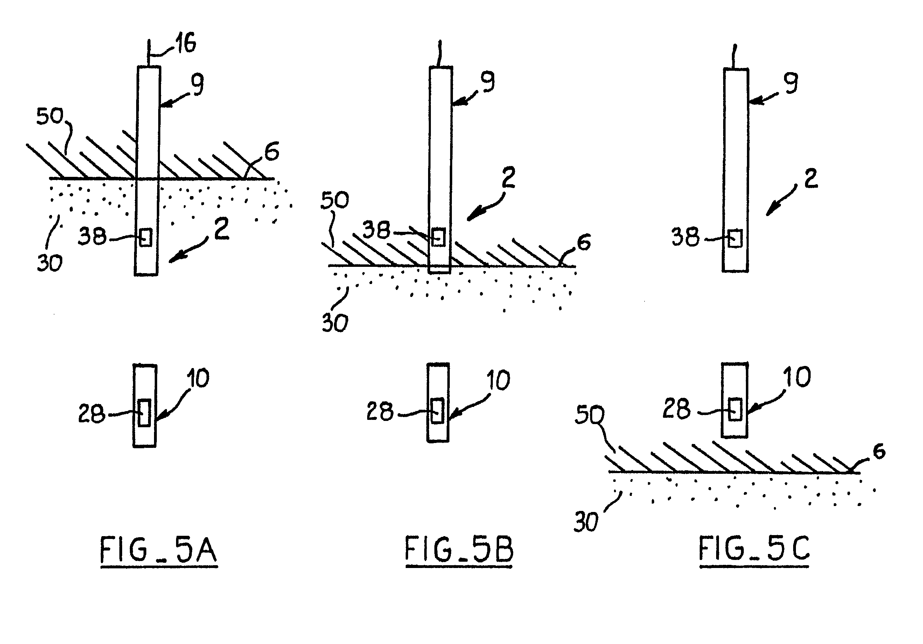

De façon plus spécifique, on a pris soin d'écarter verticalement la source 10 et le détecteur 9 d'une distance d qui, par exemple, dans le cas où on utilise une source radio-active de Césium 137 est comprise entre 40 et 60 cm, de préférence sensiblement égale à 50 cm. Aussi, si la position relative de l'interface 6 et de la sonde 2 est telle que la source émettrice et le détecteur-récepteur 9 sont situés conjointement sous le niveau de l'interface, comme il apparaît au cas A de la figure 5, le détecteur-récepteur 9 va recevoir des signaux d'un premier type, après réflexion d'une partie au moins de ceux-ci par les éléments constitutifs du fluide 30 seulement.

Par contre, comme il apparaît clairement du cas C de la figure 5, dans le cas où le détecteur et la source sont tous deux situés au-dessus du niveau de l'interface 6, les signaux émis par la source 10 vont être réfléchis, en partie au moins, uniquement par le fluide 50 et le détecteur-récepteur 9 va donc recevoir des signaux reflechis d'un second type.

Au cas B de la figure 5, on voit une disposition intermédiaire telle que la source 10 est située sous l'interface 6, c'est-à-dire au niveau du fluide 30, tandis que le détecteur 9 est situé au-dessus de l'interface 6, au niveau du fluide 5u. On comprend que dans ce cas, les signaux reçus par le récepteur 9 évoluent entre les deux niveaux de signaux extrêmes correspondant aux cas A et C, lesdits signaux étant en effet réfléchis par les éléments constitutifs de l'un et l'autre des deux fluides 30, 50.

L'analyse des signaux reçus par le détecteur 9 consiste en un comptage du nombre d'impulsions qu'il reçoit au cours d'une période de temps déterminée. En d'autres termes, on mesure la fréquence des signaux reçus après réflexion en fonction du temps. Aussi, on comprend que cette mesure varie selon que les signaux émis sont réfléchis uniquement par le liquide 30, c'est-à-dire dans ce cas la saumure (cas A, figure 5), uniquement par le liquide qui surnage 50, c'est-à-dire le fuel (cas C), ou encore par les deux fluides fuel/saumure (cas B).

On notera, en outre, que dans le cas intermédiaire B, les fréquences obtenues sont représentatives à chaque instant de la proportion de chacun des deux fluides 30, 50 présents dans la zone de mesure.

Le procédé qui vient d'être décrit permet donc de déterminer la position ou l'évolution de position d'une interface. On suit ainsi la progression du creusement en cours, l'interface remontant vers la surface au fur et à mesure que la cavité se développe.

Revenant une dernière fois à la figure2, on notera que l'excentration _d'_ prévue entre les tubes 3 et 4 est surtout utile au niveau du tube inférieur 3 particulier porteur de la sonde. Aussi, peut on prévoir que les tubes 3 complémentaires disposés de part et d'autre dudit tube 3 particulier peuvent être d'axe sensiblement confondu avec l'axe 24 des tubes extérieur 4. Les joints 36 et 37 seront alors prévus, comme connu en soi, avec une forme sensiblement tronconique telle qu'elle permette l'excentration (en 23) du tube particulier 3 porteur de la sonde et parallèlement, la sensible coaxialité (en 24) des tubes complémentaires 3 avec les tubes extérieurs 4.

## Revendications

1. - Procédé de mise en place d'une sonde (2) de mesure dans une cavité (8), de façon à contrôler la position d'une interface (6) entre deux fluides (30, 50) de densités différentes dont l'un au moins peut circuler dans l'un au moins de deux tubes (3, 4) d'amenée vers la cavité (8) et/ou d'évacuation disposés de sorte que ledit premier tube (3) s'étende à l'intérieur dudit second (4), ladite sonde (2) étant reliée par un câble (16) de liaison à un poste fixe extérieur (17) et comprenant une source (10) émettrice de signaux ainsi qu'un détecteur-récepteur (9), ledit procédé étant caractérisé en ce qu'on met en place la sonde (2) dans la cavité (8) au niveau de l'espace intermédiaire (19) séparant lesdits premier (3) et second (4) tubes.

2. - Procédé selon la revendication 1, caractérisé en ce qu'on met en place ladite sonde (2)

. en la fixant sensiblement contre une partie de la paroi extérieure (3a) du premier tube (3) intérieur et

. en venant positionner la partie dudit premier tube intérieur (3) qui porte la sonde à proximité de l'endroit où l'on désire effectuer le contrôle.

3. - Dispositif (1) pour la mise en oeuvre du procédé selon la revendication 1 ou la revendication 2, destiné à contrôler, à l'intérieur d'une cavité (8) dans laquelle est disposée une sonde (2) de mesure reliée par un câble (16) de liaison à un poste fixe de traitement (17), la position d'une interface (6) séparant deux fluides (30, 50) de densités différentes dont l'un au moins peut circuler dans l'un au moins de deux tubes (3, 4) d'amenée vers la cavité et/ou d'évacuation disposés de sorte que ledit premier tube (3) s'étende à l'intérieur du second (4), ladite sonde (2) de mesure comprenant :
- une source (10) émettrice de signaux et,
- un détecteur (9) récepteur d'une partie au moins des signaux émis par la source,
ledit dispositif étant caractérisé en ce qu'il comprend des moyens (18, 12a, 12b) de positionnement de la sonde (2) au niveau de l'espace intermédiaire (19) qui sépare lesdits tubes intérieur (3) et extérieur (4).

4. - Dispositif selon la revendication 3, caractérisé en ce que lesdits moyens de positionnement sont des moyens de maintien qui viennent fixer en position ladite sonde contre la paroi extérieure (3a) du tube intérieur (3).

5. - Dispositif selon la revendication 4, caractérisé en ce que lesdits moyens de maintien comprennent :
- au moins une sangle (18) ou équivalent qui vient enserrer ledit tube intérieur (3) et ledit détecteur (9), et
un cordon de soudure qui vient fixer ladite source (10) contre la paroi extérieure (3a) du tube intérieur (3).

6. - Dispositif de contrôle selon l'une quelconque des revendications 3 à 5, caractérisé en ce que la sonde (2) est maintenue écartée du tube extérieur (4) par des entretoises (12a, 12b) liées rigidement au tube intérieur (3).

7. - Dispositif de contrôle selon la revendication 6, caractérisé en ce que les entretoises (12a, 12b) sont réparties autour du tube intérieur (3) en deux jeux sensiblement diamétralement opposées, les entretoises du premier jeu (12a) étant plus larges que celles du second jeu (12b) de façon à excentrer les deux tubes (3, 4) dont les axes (23, 24) sont sensiblement parallèles.

8. - Dispositif de contrôle selon l'une quelconque des revendications 3 à 7, caractérisé en ce que le détecteur (9) et la source (10) sont décalés verticalement et alignés dans une direction sensiblement parallèle à l'axe des tubes (3, 4).

9. - Dispositif de contrôle selon l'une quelconque des revendications 3 à 8, caractérisé en ce que la source (10) est une source radio-active.

10. - Dispositif de contrôle selon l'une quelconque des revendications 3 à 9, caractérisé en ce qu'un écran (34) est disposé entre la source (10) et le détecteur (9).

## Patentansprüche

1. Verfahren zum Positionieren einer Meßsonde (2) in einem Raum (8), um die Lage einer Grenzschicht (6) zwischen zwei Fließmitteln (30, 50) unterschiedlicher Dichte zu überwachen, von denen mindestens eines in wenigstens einem von zwei Rohren (3, 4) für den Zulauf zum Raum (8) und/oder zur Entleerung zirkulieren kann, welche derart angeordnet sind, daß sich das erste Rohr (3) in das Innere des zweiten (4) erstreckt, die Sonde (2) durch ein Verbindungskabel (16) mit einer festen äußeren Stelle (17) verbunden ist und eine Signale emittierende Quelle (10) sowie einen Detektor-Empfänger (9) aufweist, dadurch gekennzeichnet, daß man die Sonde (2) im Raum (8) an dem das erste (3) und das zweite Rohr (4) trennenden Zwischenraum (19) positioniert.

2. Verfahren nach Anspruch 1, dadurch gekennzeichnet, daß man die Sonde (2) positioniert, indem man sie im wesentlichen gegen einen Teil der Außenwand (3a) des ersten Innenrohres (3) fixiert und den Teil des ersten Innenrohres (3), welcher die Sonde trägt, in die Nähe derjenigen Stelle positioniert, wo die Überwachung erfolgen soll.

3. Vorrichtung (1) zur Durchführung des Verfahrens nach Anspruch 1 oder Anspruch 2, um im Inneren eines Raumes (8), in welchem eine Meßsonde (2) angeordnet ist, die durch ein Verbindungskabel (16) mit einer festen Behandlungsstelle (17) verbunden ist, die Lage einer Zwischenschicht (6) zu überwachen, welche zwei Fließmittel (30, 50) unterschiedlicher Dichte trennt, von denen mindestens eines in mindestens einem von zwei Rohren (3, 4) für den Zulauf zum Raum hin und/oder die Entleerung zirkulieren kann, welche derart angeordnet sind, daß sich das erste Rohr (3) in das Innere des zweiten (4) erstreckt, wobei die Meßsonde (2) aufweist:
   - eine Signale emittierende Quelle (10) und
   - einen Detektor-Empfänger (9) für wenigstens einen Teil der von der Quelle emittierten Signale, dadurch gekennzeichnet, daß die Vorrichtung Mittel aufweist (18, 12a, 12b) für das Positionieren der Sonde (2) am Zwischenraum (19), welcher das Innenrohr (3) und das Außenrohr (4) trennt.

4. Vorrichtung nach Anspruch 3, dadurch gekennzeichnet, daß die Positioniermittel Haltemittel sind, welche die Sonde gegen die Außenwand (3a) des Innenrohres (3) in Position fixieren.

5. Vorrichtung nach Anspruch 4, dadurch gekennzeichnet, daß die Haltemittel aufweisen:

   - mindestens einen Gurt (18) oder dergleichen, welcher das Innenrohr (3) und den Detektor (9) umfaßt und eine Schweißnaht, welche die Quelle (10) gegen die Außenwand (3a) des Innenrohres (3) fixiert.

6. Überwachungsvorrichtung nach einem der Ansprüche 3 bis 5, dadurch gekennzeichnet, daß die Sonde (2) im Abstand vom Außenrohr (4) durch Stege (12a, 12b) gehalten wird, die starr mit dem Innenrohr (3) verbunden sind.

7. Überwachungsvorrichtung nach Anspruch 6, dadurch gekennzeichnet, daß die Stege (12a, 12b) um das Innenrohr (3) in zwei im wesentlichen diametral gegenüberliegenden Garnituren verteilt sind, wobei die Stege der ersten Garnitur (12a) breiter sind als die der zweiten Garnitur (12b), um die zwei Rohre (3, 4), deren Achsen (23, 24) im wesentlichen parallel sind, aus dem Zentrum zu bringen.

8. Überwachungsvorrichtung nach einem der Ansprüche 3 bis 7, dadurch gekennzeichnet, daß der Detektor (9) und die Quelle (10) vertikal verschoben sind und in einer im wesentlichen zur Achse der Rohre (3, 4) parallelen Richtung in Flucht liegen.

9. Überwachungsvorrichtung nach einem der Ansprüche 3 bis 8, dadurch gekennzeichnet, daß die Quelle (10) eine radioaktive Quelle ist.

10. Überwachungsvorrichtung nach einem der Ansprüche 3 bis 9, dadurch gekennzeichnet, daß zwischen der Quelle (10) und dem Detektor (9) eine Abschirmung (34) angeordnet ist.

## Claims

1. Method of positioning a measuring probe (2) in a cavity (8) in order to be able to monitor the position of an interface (6) between two fluids (30, 50) of different densities and of which at least one is able to circulate in at least one of two tubes (3, 4) for supply to or discharge from the cavity (8), so disposed that the first tube (3) extends within the second tube (4), the said probe (4) being connected by a cable (16) to an external fixed station (17) and comprising signal emitting source (10) and a detector-receiver (9), the method being characterised in that the probe (2) is positioned in the cavity (8) at the level of the intermediate space (19) separating the said first (3) and second (4) tubes.

2. Method according to Claim 1, characterised in that the said probe (2) is placed in position
   - by being fixed substantially against a part of the outer wall (3a) of the first inner tube (3), and
   - by positioning the part of the said first inner tube (3) which carries the probe to a point close to the place at which monitoring is to be carried out.

3. An apparatus (1) for carrying out the method according to Claim 1 or Claim 2 and adapted to monitor, inside a cavity (8) in which there is a measuring probe (2) connected by a cable (16) to a fixed processing station (17), the position of an interface (6) separating two fluids (30, 50) of different densities, of which at least one is able to circulate in at least one of two tubes (3, 4) for supply to and/or discharge from the cavity, the tubes being so disposed that the said first tube (3) extends inside the second tube (4), the said measuring probe (2) comprising:

- a signals emitting source (10), and
- a detector (9) receiving at least some of the signals

emitted by the source, the said apparatus being characterised in that it comprises means (18, 12a, 12b) of positioning the probe (2) at the level of the intermediate space (19) separating the said inner (3) and outer (4) tubes.

4. An apparatus according to Claim 3, characterised in that the said positioning means are support means which fix the said probe in position against the outside wall (3a) of the inner tube (3).

5. An apparatus according to Claim 4, characterised in that the said support means comprise:

- at least one belt (18) or the like which engages around the said inner tube (3) and the said detector (9), and
- a weld bead which fixes the said source (10) to the outer wall (3a) of the inner tube (3).

6. Monitoring apparatus according to any one of Claims 3 to 5, characterised in that the probe (2) is maintained apart from the outer tube (4) by spacers (12a, 12b) rigidly connected to the inner tube (3).

7. Monitoring device according to Claim 6, characterised in that the spacers (12a, 12b) are distributed around the inner tube (3) in substantially two diametrically opposed sets, the spacers of the first set (12a) being wider than those of the second set (12b) in order eccentrically to position the two tubes (3, 4) of which the axes (23, 24) are substantially parallel.

8. Monitoring apparatus according to any one of Claims 3 to 7, characterised in that the detector (9) and the source (10) are vertically offset and are aligned in a direction substantially parallel with the axis of the tubes (3, 4).

9. Monitoring apparatus according to any one of Claims 3 to 8, characterised in that the source (10) is a radioactive source.

10. Monitoring apparatus according to any one of Claims 3 to 9, characterised in that the screen (34) is disposed between the source (10) and the detector (9).

FIG.1

FIG.2

# FIG_3

# FIG_4

FIG_5A          FIG_5B          FIG_5C

EP 0 236 203 B1